# EUROPEAN PATENT APPLICATION

(11) **EP 3 782 899 A1**
(43) Date of publication of application: **24.02.2021**
(21) Application number: 19192450.5
(22) Date of filing: 20.08.2019
(51) Int. Cl.: B63B 43/06, B63B 39/03, B63B 39/00, B63B 39/14, F03D 13/25

(54) **CONTROL SYSTEM FOR STABILIZING A FLOATING WIND TURBINE**

(71) Applicant: Siemens Gamesa Renewable Energy A/S, 7330 Brande (DK)
(72) Inventor: Esbensen, Thomas, 7400 Herning (DK); Laugesen, Kasper, 6700 Esbjerg (DK)
(74) Representative: Aspacher, Karl-Georg

(57) **Abstract**

It is described a control system (170, 270) for stabilizing a floating wind turbine (100, 200, 300, 400, 600). The control system (170, 270) comprises a measuring device (371, 471) configured for measuring a wind field (111, 211, 311, 411, 611) and a wave field (418, 618), a determining device (373, 473), wherein the determining device (373, 473) is configured for determining an excitation frequency spectrum (591, 791) of the floating wind turbine (100, 200, 300, 400, 600) on the basis of the measured wind field (111, 211, 311, 411, 611) and/or the wave field (418, 618) and/or a current floater pitch angle of the floating wind turbine (100, 200, 300, 400, 600), and wherein the determining device (373, 473) is further configured for determining a balanced state of the floating wind turbine (100, 200, 300, 400, 600), wherein in the balanced state a natural frequency (592, 792) is outside of the excitation frequency spectrum (591, 791) and/or the current floater pitch angle is equal to a pre-defined floater pitch angle. The control system (170, 270) further comprises an adjustment device (372, 472, 672) which is configured for manipulating the current floater pitch and/or the natural frequency (592, 792) until the balanced state is met. Furthermore, a floating wind turbine (100, 200, 300, 400, 600) is described which comprises a wind rotor comprising a blade (140, 240), a tower, a floating foundation (120, 220, 320, 420, 620), and an above-described control system (170, 270). Additionally, a method for stabilizing a floating wind turbine (100, 200, 300, 400, 600) is described.

## Description

### Field of invention

The present invention relates to a control system for stabilizing a floating wind turbine. Further, the present invention relates to a floating wind turbine and a method for stabilizing a floating wind turbine.

### Art Background

In the technical field of floating wind turbines, it is known that floating wind turbines are designed such that the frequencies of the overall global system, particularly of the floating wind turbine comprising a rotor-nacelle assembly, a tower and a floating foundation, do not overlap with frequencies of environmental loads, i.e. the frequencies of the environmental influences to the floating wind turbine, particularly forces from the wind and the waves. At the same time the maximum inclination of the floating foundation (floater pitch) and tower should be kept in mind, this at any given wind speed.

Therefore, the today's design process for a floating wind turbine is an iterative process in which a design optimization loop changes structural properties recursively. The design optimization loop is subject to a wide variety of boundary conditions, e.g. the maximum inclination/floater pitch at a given wind speed and a location of a global natural frequency in terms of expected environmental conditions for a specific site. When an optimized design may have been found, a more detailed exploration has to be performed in terms of running thousands of time simulations to see a response of the overall global system of the floating wind turbine to different scenarios which were not yet investigated in the design optimization loop. The respective results of the time simulations are afterwards sent back into the design optimization loop. The process is iterated until a suitable solution has been found.

Additionally, in the today's offshore industry there exists a large conservatism due to many uncertainties regarding the influence of wind loads and wave loads on the overall global system of the floating wind turbine and due to safety issues. These uncertainties find their way directly into the design optimization loop. Furthermore, to avoid any possible overlap between frequencies of environmental loads and the global natural frequency of the floating wind turbine at given environmental conditions, conservatism is put into the today's design process of the floating wind turbine, which ends up in increasing costs.

Hence, there may be a need to provide an active system which is able to actively change a global system behaviour of a floating wind turbine such that a site-dependent design of the floating wind turbine may be providable. Therefore, a modular-based design and lower costs may be possible. Additionally, the annual power output may be increased. Additionally, damages of the floating wind turbine may be decreased and therefore a durability may be elongated.

### Summary of the Invention

This need may be met by the subject matter according to the independent claims. Advantageous embodiments of the present invention are described by the dependent claims.

According to a first aspect of the invention there is provided a control system for stabilizing a floating wind turbine. The control system comprises a measuring device configured for measuring a wind field and a wave field, a determining device, wherein the determining device is configured for determining an excitation frequency spectrum of the floating wind turbine on the basis of the measured data of the wind field and/or of the wave field and/or a current floater pitch angle of the floating wind turbine, and wherein the determining device is further configured for determining a balanced state of the floating wind turbine, wherein in the balanced state a natural frequency is outside of the excitation frequency spectrum and/or the current floater pitch is equal to a pre-defined floater pitch angle. The control system further comprises an adjustment device which is configured for manipulating the current floater pitch angle and/or the natural frequency until the balanced state is met.

The described control system is based on the idea that a control system may be provided which enables a floating wind turbine to which it is mounted to react on external influences of wind and waves. Therefore, a site-independent design of a floating wind turbine may be providable.

A floating wind turbine comprises a floating foundation which may move. By a movement of the floating foundation the floating wind turbine mounted on the floating foundation moves correspondingly. The motion of the floating foundation respectively the motion of the floating wind turbine may be divided into six individual degrees of freedom, namely three translations a surge, a sway and a heave, and three rotations a roll, a pitch and a yaw.

Due to similarities in naming between the pitch of the floating foundation and the pitch of the blades, a distinction is made in the following by distinguishing between the floater pitch and the blade pitch. On the one hand, the floater pitch denotes the pitch of the floating foundation around its point of rotation. On the other hand, the blade pitch denotes a controlled pitching of the blades of the floating wind turbine.

The measuring device may measure an incoming wind field and an incoming wave field individually from each other or together by a combined measuring device.

The data of the wind field may comprise a velocity and/or velocity variation and/or a direction.

The data of the wave may comprise a wave height, a wave spreading and/or a wave period.

An excitation frequency spectrum of the floating wind turbine according to the present invention means a spectrum resulting from all of the measured frequencies of the wind and all of the measured frequencies of the waves acting on the floating wind turbine.

A current floater pitch angle of the floating wind turbine according to the present invention means a floater pitch angle of a tower of the floating wind turbine defined by each of its six degrees of freedom. With other words the floater pitch angle of the main extension direction of the tower is indicative for the floater pitch angle of the other substructures of the floating wind turbine such as the floating foundation.

The balanced state according to the present invention may be the state in which a natural frequency of the floating wind turbine is outside of the excitation frequency spectrum and/or the current floater pitch angle is equal to a pre-defined floater pitch angle.

The natural frequency of the floating wind turbine may be dependent on the characteristics of the structure of the floating wind turbine. Additionally, the natural frequency of the floating wind turbine changes due to external influences on the floating wind turbine.

The pre-defined floater pitch angle of the floating wind turbine may be the floater pitch angle where the floating wind turbine, i.e. a wind rotor of the floating wind turbine, may have a highest swept area for the wind. The highest swept area for the wind may be achieved by having a rotor plane perpendicular to the wind direction.

Therefore, when the current floater pitch angle and a pre-defined floater pitch angle are not equal, the current floater pitch angle is reduced/compensated such that it matches the pre-defined floater pitch angle and the floating wind turbine is in a balanced state.

According to an exemplary embodiment of the invention, the measuring device is configured for measuring the wind field acting on the floating wind turbine, particularly acting on a blade of the floating wind turbine, and/or the wave field acting on a floating foundation of the floating wind turbine.

The measuring device may provide the possibility to obtain data from the wind and the wave independently from each other.

The measuring device may be configured as one integrated device being configured for measuring at the same time the wind field and the wave field acting on substructures of the floating wind turbine. This may provide the possibility that the measuring device may be easily installed.

The measuring device may be configured as a plurality of separate devices which may be independently attached to different substructures of the floating wind turbine. This may provide the possibility to obtain accurate data at different substructures particularly under a wind load or a wave load.

According to an exemplary embodiment of the invention, the measuring device comprises at least one of the group consisting of a wave buoy, a light detection and ranging device, a radio detection and ranging device, and an accelerometer.

Providing the measuring device comprising a wave buoy may provide the possibility that a wave field may precisely be detected by a rugged system which may be easily used.

The wave buoy may be attached to the floating foundation or may be a wave buoy positioned in the sea water aside of the floating wind turbine.

The wave buoy attached to the floating foundation may provide the possibility to gather a direct response to the wave detected at the floating foundation of the floating wind turbine.

By providing the wave buoy positioned in the sea water aside of the floating wind turbine may provide the possibility to provide information due to continuous wave sampling from the wave at a location distanced from the floating foundation. Hence, there may be a certain time between the detection of the wave and the influence of the wave to the floating foundation. This time may be used to manipulate the floating wind turbine such that a natural frequency or a current floater pitch angle of the floating wind turbine may be adjusted.

Providing the measuring device comprising a light detection and ranging device (LIDAR) may provide the possibility that a wave may be detected already when the wave begins to form. Hence, the wave or waves may be detected at an early state.

Providing the measuring device comprising a radio detection and ranging device (RADAR) may provide the possibility that by means of electromagnetic waves a ranging of a distance and an angle to the detected wave relative to the floating wind turbine may additionally be obtained. Additionally, a relative movement between the floating wind turbine and the detected wave(s) may be possible.

The measuring device comprising an accelerometer may provide the possibility to detect an acceleration of the movement of the floating wind turbine at any position of the wind turbine by a well-known and robust device. Hence, a fail-save and cost-efficient system being easily to maintain may be provided.

According to a further embodiment of the invention, the measuring device comprises an accelerometer, an inclinometer and a strain gauge, particularly a strain gauge attached to a mooring line of the floating wind turbine.

Providing the measuring device comprising an inclinometer may have the advantage that a well-approved fail-save system may be used to detect an influence of the wind field to the floating wind turbine.

Providing the measuring device comprising a strain gauge may provide the possibility to detect the influence of the wind to the floating wind turbine at a further position, particularly at the mooring line or at each mooring line attaching the floating wind turbine. Hence, the influence of the wind may be detected by directly measuring the influence of the wind on the floater pitch angle of the floating wind turbine.

Providing a combination of the above-described measuring devices may provide a possibility to obtain more than one measurement of the wave field and more than one measurement of the wind field. Therefore, a more precise indication of the wind field and the wave field may be obtained. Additionally, a possible error in measurement and/or measuring inaccuracies may be equalized.

According to a further exemplary embodiment, the adjustment device is configured for manipulating the current floater pitch angle and/or the natural frequency by manipulating at least one of the group consisting of a pitch, a roll, a yaw, a surge, a sway and a heave of the floating wind turbine.

By manipulating one of the six degrees of freedom (i.e. the pitch, the roll, the yaw, the surge, the sway and the heave) a quick response in a change of the floater pitch angle of the floating wind turbine may be achieved. Particularly isolated manipulating of the pitch of the floating wind turbine may result in a fast tilting along the floater pitch.

By manipulating more than one of the six degrees of freedom at the same time may provide the possibility to precisely manipulate the floater pitch angle of the floating wind turbine. At the same time a fine tuning for example of the nacelle yaw angle may be possible to achieve a maximum swept area of the rotor plane.

By manipulating the heave of the floating wind turbine, particularly in the direction towards a sea floor, may provide the possibility to submerge the tower and the floating foundation deeper into the sea water. Therefore, a natural frequency of the floating turbine may be individually adapted.

According to a further exemplary embodiment of the invention, the adjustment device is configured for manipulating the current floater pitch angle and/or the natural frequency by manipulating at least one of the group consisting of a mass, a buoyancy and a draught of the floating wind turbine.

According to an exemplary embodiment of the present invention, manipulating the mass of the floating wind turbine may be performed by pumping sea water into a water tank fixed to the floating foundation of the floating wind turbine. Therefore, sea water being already available around the water tank may be used such that a reliable adjustment device may exist. Additionally, by providing more than one water tank at the same time the other five degrees of freedom may be manipulated simultaneously with or independently of the heave.

The buoyancy may be manipulated in an exemplary embodiment of the invention by manipulating the mass of the floating wind turbine.

The draught may be manipulated in an exemplary embodiment of the invention by manipulating the mass of the floating wind turbine. According to a further exemplary embodiment the draught may be manipulated by decreasing or increasing the length of the mooring lines. Therefore, a mooring line actuator may be attached to each mooring line.

According to an exemplary embodiment of the present invention, the adjustment device comprises at least one of the group consisting of a mooring line actuator and a ballast tank, particularly with a water pump.

A mooring line actuator may provide a possibility for fine-tuning the orientation and position of the floating wind turbine. One mooring line actuator attached to each of the mooring lines holding in place the floating wind turbine may provide a possibility to manipulate the floating wind turbine along each of or a combination of the surge, the sway, the heave, the roll, the pitch and the yaw.

A ballast tank, particularly with a water pump, may provide the possibility for efficiently providing large movements along each of or a combination of the heave, the pitch and the roll.

Providing a combination of the above-described adjustment devices may provide a possibility to obtain more than one direction of manipulation and hence of movement of the floating wind turbine. Therefore, a fine-tuning and a free movement of the floating wind turbine may be provided.

According to an exemplary embodiment of the invention, the determining device is configured for determining an excitation frequency spectrum of the floating wind turbine on the basis of the measured wind field and/or of the wave field by using a dependency of the excitation frequency spectrum and the measured wind field and/or the wave field and a dependency of the floating wind turbine global natural frequency. The dependency may be documented in a table. Therefore, an easy access to the dependency may be provided.

The dependency of the excitation frequency spectrum and the measured data of the wind field and/or of the wave field may be known and may be independent of the type of floating wind turbine. The dependency depends rather on the environmental conditions which are specific for each location. Hence, using the dependency to determine the excitation frequency spectrum may provide the possibility to have a fail-save determining device which may be individually used.

According to an exemplary embodiment of the present invention, the determining device is configured for determining a current floater pitch angle of the floating wind turbine on the basis of the measured wind field and/or of the wave field by using a dependency of the floater pitch angle and the measured wind field and/or of the wave field.

The dependency of the current floater pitch angle of the floating wind turbine and the measured wind field and/or of the wave field may be known and may be independent of the location. The dependency depends rather on the type of floating wind turbine such as the geometry of the floating wind turbine, which is specific for each floating wind turbine. Hence, using the dependency to determine the current floater pitch angle may provide the possibility to have a fast determining device which may be individually used.

According to a further aspect of the invention there is provided a floating wind turbine. The floating wind turbine comprises (a) a wind rotor comprising a blade, (b) a tower, (c) a floating foundation, and (d) an above-described control system.

Also, the described system is based on the idea that a control system may be provided which enables the floating wind turbine to which it is mounted to react on external influences of wind and wave. Therefore, a site-independent design of a floating wind turbine may be providable.

According to a further aspect of the invention there is provided a method for stabilizing a floating wind turbine. The method comprises (a) measuring a wind field and/or a wave field, (b) determining an excitation frequency spectrum of the floating wind turbine on the basis of the measured wind field and/or the wave field and/or a current floater pitch angle of the floating wind turbine, (c) determining a balanced state of the floating wind turbine, wherein in the balanced state the natural frequency is outside of the excitation frequency spectrum and/or the current floater pitch angle is equal to a pre-defined floater pitch angle, and (d) manipulating the current floater pitch angle and/or the natural frequency until the balanced state is met.

Also, the described method is based on the idea that the floating wind turbine to which the control system is mounted reacts on external influences of wind and waves. Therefore, a site-independent stabilization of a floating wind turbine may be providable.

In the following some exemplary embodiments of the present invention are described.

A first exemplary embodiment of the present invention may be based on avoiding that excitation frequencies of external environmental influences as for example a wind load and/or a wave load, coincide with the current global natural frequency of the floating wind turbine. In contrast to conventional approaches, an adaptive system may change the system behaviour of the floating wind turbine. Hence, the natural frequency of the floating wind turbine changes accordingly. Changing the natural frequency of the floating wind turbine may be done via a mooring line actuator and/or a ballast tank with a water pump. Additionally, or alternatively, the natural frequency of the floating wind turbine may be changed by lowering an offset for example in a floater pitch angle, due to a thrust force.

By making use of a mooring line actuator, the effective length of the mooring line may be changed. Thereby either decreasing or increasing a draught of the floating wind turbine. The line actuator may also be used for decreasing or increasing e.g. a keel of the floating wind turbine and thereby changing an effective centre of gravity of the floating wind turbine.

Using the water pumps may change a level of water in an attached ballast tank. Thereby an effective mass, a buoyancy and a draught of the floating wind turbine may be changed.

By changing the behaviour of the floating wind turbine, the floating wind turbine may be modified to a favourable configuration relative to an incoming wind force and/or wave force in terms of reducing loads and/or optimizing power production.

An exemplary solution for avoiding overlapping between excitation frequencies of external environmental influences and the global natural frequencies of the floating wind turbine comprises the following steps.

Estimating the excitation frequencies of external environmental influences, for example the influences of wind and wave. The wind excitation may be measured by standard accelerometers. The wave frequency spectrum may be measured by e.g. a wave buoy, a light detection and ranging (LIDAR), a radio detection and ranging (RADAR) or by a standard accelerometer.

Calculating an optimized configuration of the floating wind turbine for compensating the excitation frequencies of external environmental influences. In the configuration the current natural frequency of the floating wind turbine should be outside of the excitation frequencies of the external environmental influences at the same time an overall damping of the floating wind turbine should be taken into account. Subsequently, figuring out how an actuator should be manipulated to achieve the calculated optimized configuration. Particularly, the actuator may increase/decrease the draught and thereby increases/decrease the stiffness of the floating wind turbine.

Making use of one or multiple of the above-mentioned actuator to reconfigure the floating wind turbine. Continuously estimating of the current global natural frequency of the floating wind turbine may be done to make sure that the natural frequency of the floating wind turbine is as expected.

To avoid any unnecessary control actuation, the control system may be activated if the spectrum of the excitation frequencies of external environmental influences have shifted by a given threshold. For example, the control system may be activated every hour.

An exemplary solution for avoiding a pitch offset, i.e. a shift in a floater pitch angle, may comprise the following steps.

Detecting an offset between the current floater pitch and a given threshold floater pitch angle. This offset may be evaluated by an incline meter, a strain gauge attached to a mooring line and/or an accelerometer.

Calculating a configuration of the floating wind turbine in which the offset is compensated. Optimizing the current configuration may be done by increasing the draught and thereby increasing the stiffness of the floating wind turbine. The optimizing may consider a cost function which includes both the offset of the floater pitch angle and possible excitation frequencies of external environmental influences. If for example by modifying the offset in the floater pitch angle, the natural frequency of the floating wind turbine is dragged further into the spectrum of the excitation frequencies of the external environmental influence, the consequences may have to be evaluated to identify the global optimum solution.

Subsequently, making use of the above-described actuator for reconfiguring the floating wind turbine.

By using the control system to actively change the global system behaviour of the floating wind turbine to inhibit that the excitation frequencies from the environmental influences overlap with the current natural frequency of the floating wind turbine, it may be possible to make advantage of a modular-based design, designed according to the wind turbine and not the specific site. This may streamline design and production and lower costs in the production line. Furthermore, an opportunity may be created to e.g. hourly change the natural frequency of the floating wind turbine based on wind and wave forecasts to reduce the load and optimize a power output. With the possibility of changing the system configuration of the floating wind turbine, the today's conservatism may be made narrower.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a floating wind turbine according to an exemplary embodiment of the present invention.
- Figure 2: shows a floating wind turbine according to a further exemplary embodiment of the present invention in an unbalanced state.
- Figure 3: shows a floating wind turbine according to a further exemplary embodiment of the present invention in a balanced state.
- Figure 4: shows a floating wind turbine according to a further exemplary embodiment of the present invention in a further unbalanced state.
- Figure 5: shows a diagram of a frequency distribution of the floating wind turbine according to an exemplary embodiment of the invention in the unbalanced state of Figure 4.
- Figure 6: shows a floating wind turbine according to a further exemplary embodiment of the present invention in a further balanced state.
- Figure 7: shows a diagram of a frequency distribution of the floating wind turbine according to an exemplary embodiment of the invention in the balanced state of Figure 6.

### Detailed Description

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

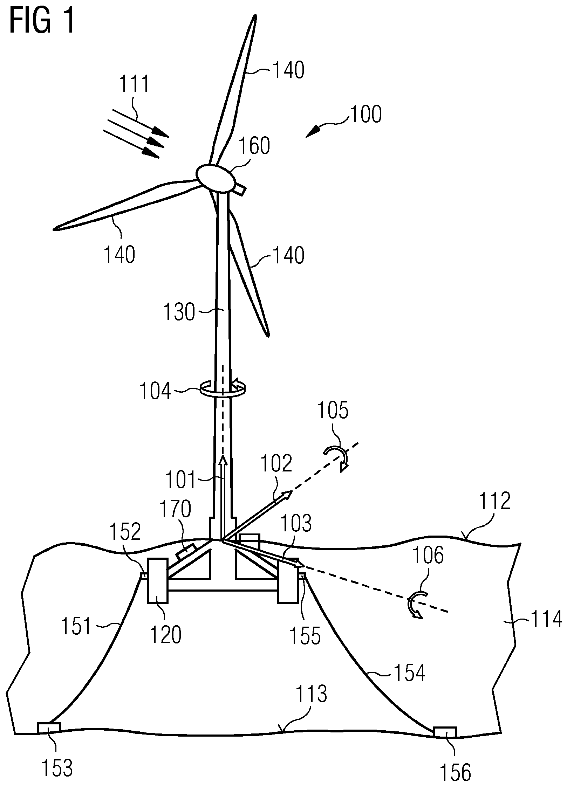

Figure 1 shows a floating wind turbine 100 according to an exemplary embodiment of the present invention. The floating wind turbine 100 comprises three blades 140 attached to a hub mounted to a nacelle 160, a tower 130 and a floating foundation 120. The floating wind turbine 100 further comprises a plurality of mooring lines. Only a first mooring line 151 and a second mooring line 154 are shown in Figure 1 for clarity reasons. The first mooring line 151 is fixed to the floating foundation 120 by a first mooring line fixation 152 and to a sea floor 113 by a second mooring line fixation 153. Further, the second mooring line 154 is fixed to the floating foundation 120 by a further first mooring line fixation 155 and to a sea floor 113 by a further second mooring line fixation 156.

The floating foundation 120 is fixed by the first mooring line 151 and the second mooring line 152 in such a manner that the floating foundation 120 is dunked into sea water 114 under the sea surface 112. Therefore, the floating foundation 120 is held under water by the mooring lines and the self-weight. A wind 111 acts on the three blades 140 of the floating wind turbine 100 such that electrical energy may be generated by the floating wind turbine 100.

The floating wind turbine 100 floats in the sea water 114 and is held in position by the mooring lines, exemplarily illustrated by the first mooring line 151 and the second mooring line 154 in Figure 1. The floating wind turbine 100 has six individual degrees of freedom in which the floating wind turbine 100 may move. Namely, three translations surge 103, sway 102 and heave 101, and three rotations roll 106, pitch 105 and yaw 104.

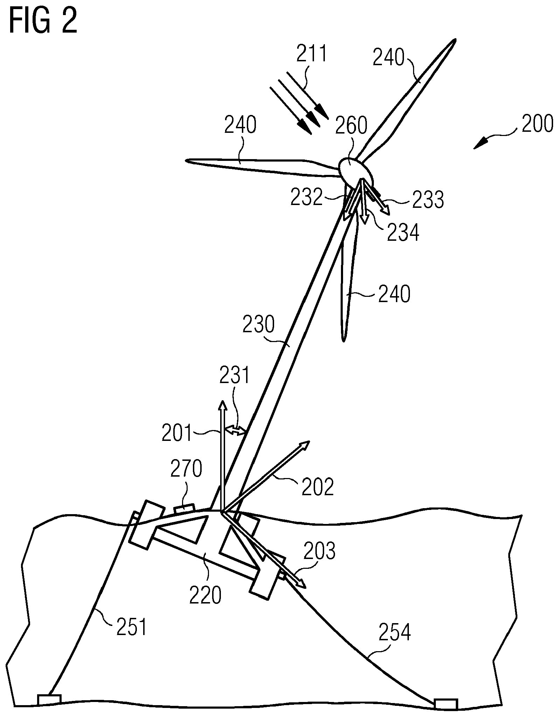

Figure 2 shows a floating wind turbine 200 according to a further exemplary embodiment of the present invention in an unbalanced state.

The floating wind turbine 200 is tilted around the floater pitch 105 such that an offset 231 in the floater pitch angle occurs. The floating foundation 220, the rotor and the tower 230 are tilted around the floater pitch 105 due to the wind 211 acting onto the three blades 240.

A weight of the nacelle 260 together with forces due to the wind field 211 acting on the blades 240 compose a weight force 234. The weight force 234 comprises a first force component 232 and a second force component 233. The first force component 232 is parallel to an extension direction of the tower 230 and the second force component 233 is perpendicular to the first force component.

Therefore, in the unbalanced state as illustrated in Figure 2 shearing forces are acting on a connection of the nacelle 260 and the tower 230 due to the offset 231.

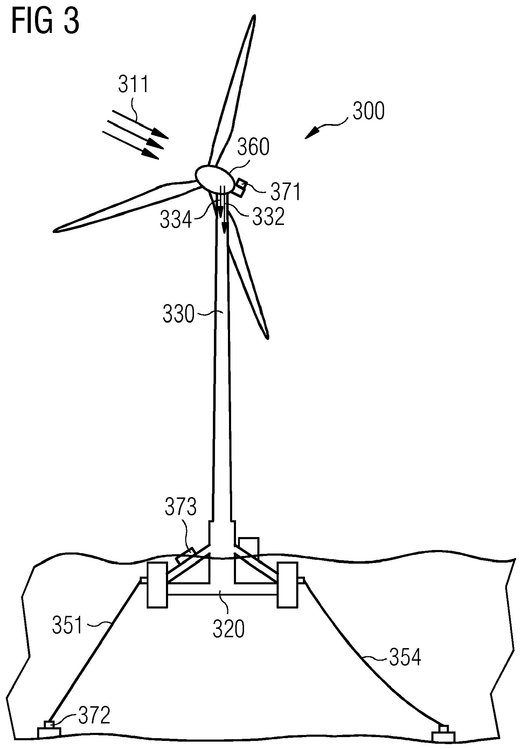

Figure 3 shows a floating wind turbine 300 according to a further exemplary embodiment of the present invention in a balanced state.

The floating wind turbine 300 comprises a nacelle 360, a tower 330 and a floating foundation 320. A measuring device 371 is configured for measuring the wind field 311 and a determining device 373 is configured for determining that the current floater pitch angle as shown in Figure 2 has an offset 231 (illustrated in Figure 2) relative to the pre-defined floater pitch angle. Subsequently an adjustment device 372 formed as a mooring line actuator manipulates the first mooring line 351 such that a length of the mooring line 351 in the balanced state as shown in Figure 3 is shorter than a length of the mooring line 251 in the unbalanced state as shown in Figure 2.

As a result, in the balanced state the weight force 334 extends in the same direction as a first force component 332 parallel to the extension direction of the tower 330. Therefore, in the balanced state as shown in Figure 3, no shearing forces due to self-weight are acting on a connection of the nacelle 360 and the tower 330.

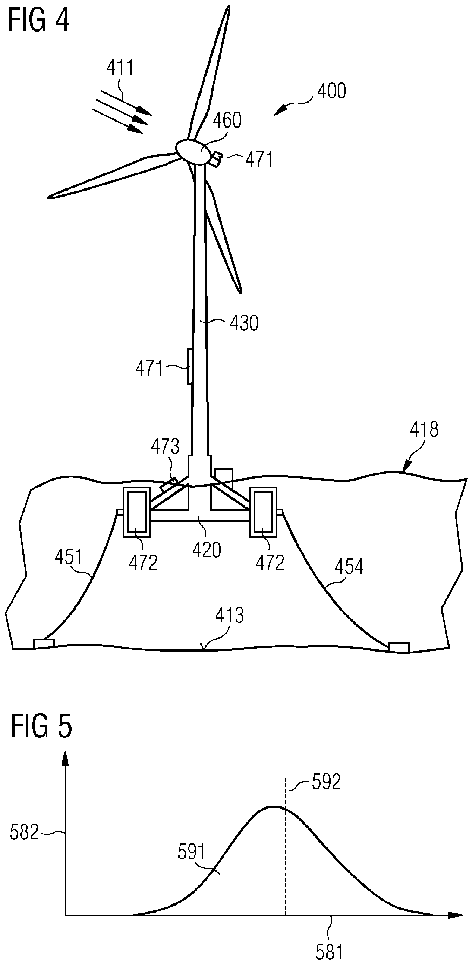

Figure 4 shows a floating wind turbine 400 according to a further exemplary embodiment of the present invention in a further unbalanced state.

The floating wind turbine 400 comprises a nacelle 460, a tower 430 and a floating foundation 420 and is floatingly anchored to a sea floor 413 by mooring lines, exemplarily illustrated as a first mooring line 451 and a second mooring line 454 in Figure 4. A first measuring device 471 formed as a light detection and ranging device (LIDAR) is mounted to the nacelle and measures a wave field 418 and a second measuring device 471 formed as an accelerometer is mounted to the tower 430. Furthermore, a determining device 473 is mounted to the floating foundation 420. The determining device 473 determines an excitation frequency spectrum of the floating wind turbine 400. Two adjustment devices 472 formed as water tanks are mounted to the floating foundation 420.

Figure 5 shows a diagram of a frequency distribution of the floating wind turbine 400 according to an exemplary embodiment of the invention in the unbalanced state of Figure 4.

In the diagram shown in Figure 5 a graph is plotted showing power on the ordinate 582 and frequency on the abscissa 581. An excitation frequency spectrum 591 of the floating wind turbine 400 determined by the determining device 473 is shown in Figure 5. A natural frequency 592 of the floating wind turbine 400 is also be shown in the diagram.

As illustrated in Figure 5 the natural frequency 592 of the floating wind turbine 400 is inside the excitation frequency spectrum 591 of the load of the wind field 411 and the wave field 418. Therefore, the diagram in Figure 5 illustrates the further unbalanced state of the floating wind turbine 400 (shown in Figure 4).

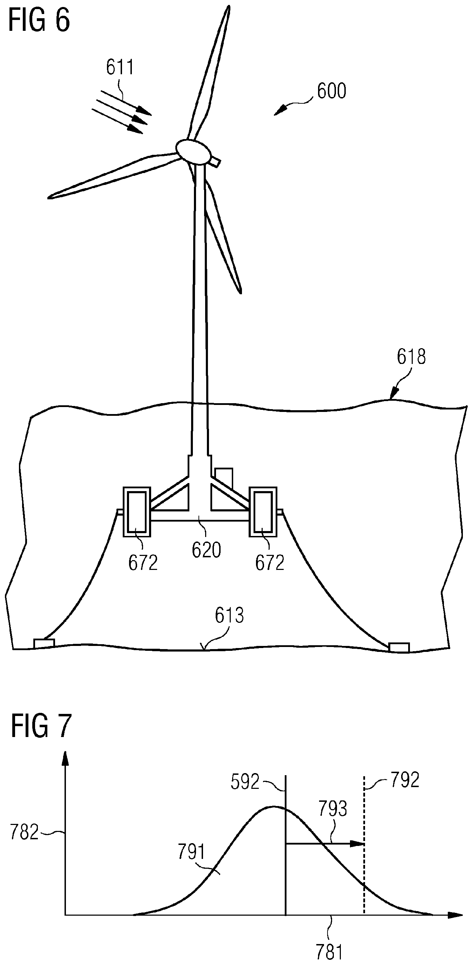

Figure 6 shows a floating wind turbine 600 according to a further exemplary embodiment of the present invention in a further balanced state.

Compared to the floating wind turbine 400 as shown in Figure 4, the two adjustment devices formed as two water tanks 672 are filled with sea water. Therefore, the weight of the floating wind turbine 600 rises and the floating wind turbine 600 sinks deeper into the sea water and hence nearer to a sea floor 613. Therefore, the natural frequency of the floating wind turbine 600 shifts such that the natural frequency is outside of the excitation frequency spectrum of the load of the wind field 611 and the wave field 618.

Figure 7 shows a diagram of a frequency distribution of the floating wind turbine according to an exemplary embodiment of the invention in the balanced state of Figure 6.

In the diagram shown in Figure 7 a graph is plotted showing power on the ordinate 782 and frequency on the abscissa 781. An excitation frequency spectrum 791 of the floating wind turbine 600 determined by the determining device 473 is shown in Figure 7. A natural frequency 792 of the floating wind turbine 600 is also be shown in the diagram as a dashed line.

Additionally, the natural frequency 592 is also shown in the diagram as a continuous line. The natural frequency 792 is outside the excitation frequency spectrum 791. A displacement 793 illustrates the difference between the natural frequency 592 in an unbalanced state and the natural frequency 792 in a balanced state.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. Control system (170, 270) for stabilizing a floating wind turbine (100, 200, 300, 400, 600), the control system (170, 270) comprising
a measuring device (371, 471) configured for measuring a wind field (111, 211, 311, 411, 611) and/or a wave field (418, 618),
a determining device (373, 473),
wherein the determining device (373, 473) is configured for determining an excitation frequency spectrum (591, 791) of the floating wind turbine (100, 200, 300, 400, 600) on the basis of the measured wind field (111, 211, 311, 411, 611) and/or the measured wave field (418, 618) and/or a current floater pitch angle of the floating wind turbine (100, 200, 300, 400, 600),
wherein the determining device (373, 473) is further configured for determining a balanced state of the floating wind turbine (100, 200, 300, 400, 600), wherein in the balanced state a natural frequency (592, 792) is outside of the excitation frequency spectrum (591, 791) and/or the current floater pitch angle is equal to a pre-defined floater pitch angle,
an adjustment device (372, 472, 672) which is configured for manipulating the current floater pitch angle and/or the natural frequency (592, 792) until the balanced state is met.

2. The control system (170, 270) according to claim 1, wherein the measuring device (371, 471) is configured for measuring the wind field (111, 211, 311, 411, 611) acting on the floating wind turbine (100, 200, 300, 400, 600), particularly acting on a blade (140, 240) of the floating wind turbine (100, 200, 300, 400, 600), and/or the measured wave field (418, 618) acting on a floating foundation (120, 220, 320, 420, 620) of the floating wind turbine (100, 200, 300, 400, 600).

3. The control system (170, 270) according to claim 1 or 2, wherein the measuring device (371, 471) comprises at least one of the group consisting of a wave buoy, a light detection and ranging device, a radio detection and ranging device, and an accelerometer.

4. The control system (170, 270) according to any one of the claims 1 to 3,
wherein the measuring device (371, 471) comprises at least one of the group consisting of an accelerometer, an inclinometer, and a strain gauge, particularly a strain gauge attached to a mooring line (251, 254, 351, 354, 451, 454) of the floating wind turbine (100, 200, 300, 400, 600).

5. The control system (170, 270) according to any one of the claims 1 to 4,
wherein the adjustment device (372, 472, 672) is configured for manipulating the current floater pitch angle and/or the natural frequency (592, 792) by manipulating at least one of the group consisting of a pitch (105), a roll (106), a yaw (104), a surge (103, 203), a sway (102, 202) and a heave (101, 201) of the floating wind turbine (100, 200, 300, 400, 600).

6. The control system (170, 270) according to any one of the claims 1 to 5,
wherein the adjustment device (372, 472, 672) is configured for manipulating the current floater pitch angle and/or the natural frequency (592, 792) by manipulating at least one of the group consisting of a mass, a buoyancy and a draught of the floating wind turbine (100, 200, 300, 400, 600).

7. The control system (170, 270) according to any one of the claims 1 to 6,
wherein the adjustment device (372, 472, 672) comprises at least one of the group consisting of a mooring line actuator and a ballast tank, particularly a ballast tank with a water pump.

8. The control system (170, 270) according to any one of the claims 1 to 7,
wherein the determining device (373, 473) is configured for determining an excitation frequency spectrum (591, 791) of the floating wind turbine (100, 200, 300, 400, 600) on the basis of the measured wind field (111, 211, 311, 411, 611) and/or the measured wave field (418, 618) by using a dependency of the excitation frequency spectrum (591, 791) and the measured wind field (111, 211, 311, 411, 611) and/or the wave field (418, 618).

9. The control system (170, 270) according to any one of the claims 1 to 8,
wherein the determining device (373, 473) is configured for determining a current floater pitch angle of the floating wind turbine (100, 200, 300, 400, 600) on the basis of the measured wind field (111, 211, 311, 411, 611) and/or the measured wave field (418, 618) by using a dependency of the floater pitch angle and the measured wind field (111, 211, 311, 411, 611) and/or the measured wave field (418, 618).

10. Floating wind turbine (100, 200, 300, 400, 600) comprising
a wind rotor comprising a blade (140, 240),
a tower (130, 230, 330, 430),
a floating foundation (120, 220, 320, 420, 620), and
a control system (170, 270) according to any one of the claims 1 to 9.

11. Method for stabilizing a floating wind turbine (100, 200, 300, 400, 600), the method comprising
measuring a wind field (111, 211, 311, 411, 611) and/or a wave field (418, 618),
determining an excitation frequency spectrum (591, 791) of the floating wind turbine (100, 200, 300, 400, 600) on the basis of the measured wind field (111, 211, 311, 411, 611) and/or the measured wave field (418, 618) and/or a current floater pitch angle of the floating wind turbine (100, 200, 300, 400, 600),
determining a balanced state of the floating wind turbine (100, 200, 300, 400, 600), wherein in the balanced state the natural frequency (592, 792) is outside of the excitation frequency spectrum (591, 791) and/or the current floater pitch angle is equal to a pre-defined floater pitch angle,
manipulating the current floater pitch angle and/or the natural frequency (592, 792) until the balanced state is met.
